# EUROPEAN PATENT SPECIFICATION

(11) **EP 0 382 486 B1**
(45) Date of publication and mention of the grant of the patent: **10.12.1997**
(21) Application number: 90301248.2
(22) Date of filing: 06.02.1990
(51) Int. Cl.: C08L 67/00, C08K 5/11, C08G 63/60, C09K 19/38, C08K 5/10

(54) **Liquid-crystal polyester resin composition**
Flüssigkristalline Polyesterharz-Zusammensetzung
Composition de résine de polyester liquide cristallin

(30) Priority: 08.02.1989 JP 29389/89
(43) Date of publication of application: 16.08.1990
(73) Proprietor: POLYPLASTICS CO. LTD., Chuo-Ku Osaka-shi Osaka 541 (JP)
(72) Inventor: Nakai, Mikio, Fuji-shi, Shizuoka (JP)
(74) Representative: Jackson, Peter

(56) References cited:
- EP-A- 0 066 997
- EP-A- 0 168 503
- EP-A- 0 175 535
- EP-A- 0 242 987
- EP-A- 0 292 275
- DE-A- 3 031 491
- US-A- 4 530 953

## Description

The present invention relates to a liquid-crystal polyester resin composition. More particularly, the present invention relates to a liquid-crystal polyester resin composition which has improved mold-release characteristics, is of such thermal and chemical stability that it does not generate any decomposition gas, does not stain electrical contacts, and has excellent mechanical characteristics.

Thermoplastic resins for use as electrical or electronic components or as parts of automobiles or chemical instruments are generally required to have high heat resistance. Liquid-crystal polyester resins satisfy this requirement and are frequently used in the preparation of precision molded articles, because the resin has excellent fluidity and exhibits low shrinkage when its melt is solidified. However, even liquid-crystal polyester resins have poor release characteristics from a mold of complicated shape such that difficulties in achieving their stable continuous molding give a low molding rate (a long molding cycle) and resultant low productivity. That is, although a liquid-crystal polyester resin has better mold release characteristics than other resins, its mold release characteristics have not hitherto been satisfactory for molding precision parts.

Addition of a release (parting) agent to a resin has previously been employed as a means for improving the mold release characteristics of the resin. The following methods have been disclosed:
(1) addition of a metal salt of a fatty acid, such as zinc stearate or lithium stearate,
(2) addition of a fatty acid ester such as glycerol tristearate,
   and
(3) addition of a fatty acid amide such as N,N'-alkylenebisalkanamide.

Although methods (1), (2) and (3) are effective in improving the mold release characteristics of an article formed from a liquid-crystal polyester resin, they are all subject to decomposition of the release agent. This decomposition leads to gas evolution in kneading or molding of the article, discoloration of the molded article, reduction of the article's mechanical properties and/or staining of electrical contacts on the article. These undesirable effects of the decomposition arise because the thermal decomposition temperature of the release agent is lower than the molding temperature of a liquid-crystal polyester resin.

German laid-open patent specification DE-A-3031491 relates to certain polyester mixtures, in particular to a mixture containing a polyarylate composed of recurring units derived from bisphenol-A (50 mole percent), isophthalic acid (25 mole percent) and terephthalic acid (25 mole percent), having improved flow properties by virtue of the presence of a small proportion of pentaerythritol tetrastearate as a flow enhancer.

United States patent specification US-A-4530953 relates to a polyethylene terephthalate composition reinforced with inorganic fibres and having an improved mold release property. Specifically it claims a polyester resin composition comprising a polyethylene terephthalate resin, 50 to 60 wt % of inorganic fibres and 0.01 to 2 wt of a defined ester such as pentaerythritol tetrastearate or other mono-, di-, tri- and tetra-esters of pentaerythritol.

Our earlier European patent specification EP-A-0242987 relates to a resin composition which exhibits anisotropism when melted and which comprises a first resin component with a rigid skeleton and a second resin component with a rigid skeleton and a flexible skeleton and optionally slip agents for the improvement of fluidity and mold release. Compounds used to form the respective skeletons include polyesters, polyesteramides and polyamides. The segment constituting the flexible skeleton of the second component is selected from polyarylate polyesters (constructed of bisphenol, terephthalic acid, and isophthalic acid), polyalkylene terephthalate, polycarbonate, polyether sulfone and polyacrylate.

The inventors of the present invention have made studies upon various release agents in order to obtain a liquid-crystal polyester resin composition which has improved mold release characteristics and an insignificant degree of decomposition which avoids the undesirable effects described above. They have found that the mold release characteristics of a liquid-crystal polyester resin are considerably improved by the addition thereto of an ester of a fatty acid with an aliphatic alcohol not having any hydrogen atoms bonded to the carbon atom at position β against an alcoholic hydroxyl group. The improvements are achieved without lowering the mechanical properties of the resin, such that the resulting composition is stable, even at a resin-molding temperatures, whereby neither decomposition nor gas evolution is caused. The present invention has been accomplished on the basis of these findings.

Namely, the present invention as disclosed in claims 1-10 relates to a liquid-crystal polyester resin composition comprising:
(A) 100 parts by weight of a liquid-crystal polyester resin consisting of aromatic segments and, optionally, up to 20 mol % segments of poly(C₂₋₄ alkylene)terephthalate, and
(B) 0.01 to 5 parts by weight of a fatty acid ester represented by the general formula: 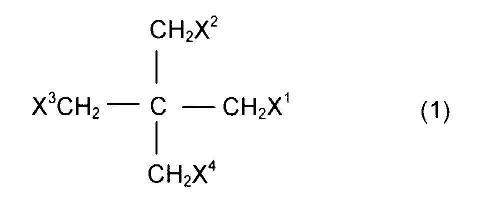
wherein at least one of X¹, X², X³, and X⁴is a group represented by the general formula: 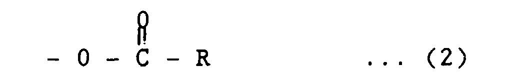 wherein R is an alkyl or alkenyl group having 2 to 30 carbon atoms,
and the others thereof are each -H, -OH or an alkyl or aryl group.

When a molded article made of a composition prepared by adding a fatty acid ester (B) as defined above to a general heat-resistant resin such as polyphenylene sulfide or polyether ether ketone is used at a high temperature for a long period of time, the fatty acid ester will bleed out and stain any associated electrical contacts. In contrast, a liquid-crystal polyester resin according to the present invention is compatible with the added fatty acid ester by virtue of the ester linkages present in the resin skeleton such that little or no bleed-out of the added ester occurs and staining of associated electrical contacts is reduced or eliminated.

Although the release agent to be used as the component (B) in the present invention may be any fatty acid ester having a structure represented by the general formula (1), it is preferable to use an ester of a fatty acid with a polyhydric alcohol represented by the general formula (1) wherein all of X¹, X², X³, and X⁴ are groups represented by the general formula: 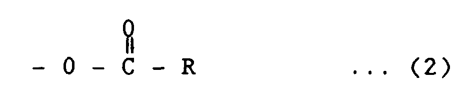 or wherein all of X¹, X², X³ are groups represented by the general formula (2) and X⁴ is -OH, -H or an alkyl or aryl group.

Although R in the general formula (2) may be any alkyl or alkenyl group having 2 to 30 carbon atoms, it is preferred that R be an alkyl group having 8 to 24 carbon atoms.

It is further preferred that when any of X¹, X², X³ and X⁴ is an alkyl group, each such alkyl group has 1 to 6 carbon atoms, most preferably 1 to 3 carbon atoms, and that when any of X¹, X², X³ and X⁴ is an aryl group, each such aryl is phenyl.

When a molded article made of a composition prepared by adding a fatty acid ester (B) as defined above to a general heat-resistant resin such as polyphenylene sulfide or polyether ether ketone is used at a high temperature for a long period of time, the fatty acid ester will bleed out and stain any associated electrical contacts. In contrast, a liquid-crystal polyester resin according to the present invention is compatible with the added fatty acid ester by virtue of the ester linkages present in the resin skeleton such that little or no bleed-out of the added ester occurs and staining of associated electrical contacts is reduced or eliminated.

Representative examples of the compound represented by the general formula (1) include esters of higher fatty acids with neopentyl alcohol, neopentyl glycol or pentaerythritol, among wich pentaerythritol tri- or tetra-stearate and pentaerythritol tri- or tetraoleate are preferred, because they cause less staining of the contacts of an electrical component.

The amount of the fatty acid ester to be used in the present invention is 0.01 to 5 parts by weight, preferably 0.1 to 2 parts by weight, per 100 parts by weight of the liquid-crystal polyester resin. If the amount is less than 0.01 part by weight, no objective effect can be attained, while if it exceeds 5 parts by weight, the resulting composition will be unfavorably lowered in physical properties and will evolve a gas.

The polyester to be used in the present invention is of the type which displays the liquid-crystal or anisotropic state, is melt-processable and has the property that its molecular chains assume a regular parallel arrangement in a molten state. Such an oriented state of molecules is also known as the "nematic phase of a liquid-crystal substance". The molecule of a liquid-crystal polymer is generally slender and flat, exhibits relatively high stiffness along its major axis and has a plurality of chain-lengthening bonds which are present coaxially or in parallel.

The presence of an anisotropic molten phase can be ascertained by a conventional test with polarized light using crossed nicols. More precisely, a molten sample put on a Leitz hot stage is observed in a nitrogen atmosphere by the use of a Leitz polarization microscope (40 x magnification). When the polymer according to the present invention is subjected to the above test between crossed nicls, polarized light is transmitted through the nicols even when the polymer is in a static molten state, which means that the polymer is optically anisotropic.

Liquid-crystal polymers suitable for use in the present invention are substantially insoluble in an ordinary solvent, such that processing thereof in a dissolved state is not possible. As described above, however, they can be easily processed by a conventional melt processing method.

The components constituting an anisotropic molten phase-forming polymer are selected from among
[1] one or more of aromatic or dicarboxylic acids,
[2] one or more of aromatic or alicyclic diols,
[3] one or more of aromatic hydroxy carboxylic acids,
[4] one or more of aromatic thiol carboxylic acids,
[5] one or more of aromatic thiol phenols and
[6] one or more of aromatic hydroxy amines and aromatic diamines.
Namely, the anisotropic molten phase-forming polymer according to the present invention is a polymer composed of at least one segment from among
I) polyesters mainly comprising the components [1] and [2],
II) polyesters mainly comprising the component [3] alone,
III) polyesters mainly comprising the components [1], [2] and [3],
IV) polythiol esters mainly comprising the component [4] alone,
V) polythiol esters mainly comprising the components [1] and [5],
VI) polythiol esters mainly comprising the components [1], [4] and [5],
VII) polyester amides mainly comprising the components [1], [3] and [6]
   and
VIII) polyester amides mainly comprising the components [1], [2], [3] and [6]
These polymers may each contain up to 20 mol% of poly (C₂₋₄ alkylene) terephthalate, as far as they can exhibit liquid crystal properties.

Further, the anisotropic molten phase-forming polymer according to the present invention includes polyester carbonates, though they do not fall into any of the above combination categories. Polyester carbonates substantially comprises 4-oxybenzoyl units, dioxyphenyl units, dioxycarbonyl units and terephthaloyl units.

An anisotropic molten phase-forming polymer which is particularly suitable for use in the present invention is a polymer mainly comprising aromatic polyesters I), II) or III) or aromatic polyester amides VIII). It can be prepared by reacting organic monomers having functional groups which can form the corresponding repeating units according to various esterification methods.

Preferred examples of the monomers constituting the above polymers include naphthalene compounds such as 2,6-naphthalenedicarboxylic acid, 2,6-dihydroxynaphthalene, 1,4-dihydroxynaphthalene and 6-hydroxy-2-naphthoic acid; biphenyl compounds such as 4,4'-diphenyldicarboxylic acid and 4,4'-dihydroxybiphenyl; compounds represented by the following general formulas (I), (II) and (III): 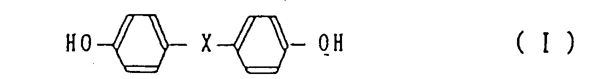 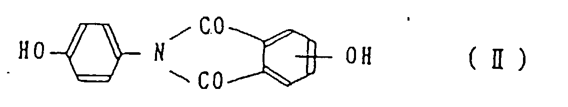 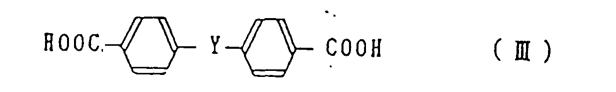 wherein X is a group selected from among alkylene (C₁₋₄), alkylidene, -O-, -SO-, -S0₂, -S- and -CO-, and Y is a group selected from among -(CH₂)ₙ- (n = 1 to 4) and -O((CH₂)ₙO- (n = 1 to 4);
p-substituted benezene compounds such as p-hydroxybenzoic acid, terephthalic acid, hydroquinone, p-aminophenol and p-phenylene diamine, nuclear-substituted derivatives thereof (the substituent being selected from among chlorine, bromine methyl, phenyl and 1-phenylethyl); and m-substituted benzene compounds such as isophthalic acid and resorcinol.

The liquid-crystal polyester to be used in the present invention may partially contain a polyalkylene terephthalate segment not forming an anisotropic molten phase in addition to the above segment in the same molecular chain. The alkylene group may be one having 2 to 4 carbon atoms.

Among the above monomers, it is most preferred to use one or more compounds selected from among naphthalene compounds, biphenyl compounds and p-substituted benzene compounds as the constituents of the polymer. Among the p-substituted benzene compounds, it is particularly preferred to use p-hydroxybenzoic acid, methylhydroquinone or 1-phenyl-ethylhydroquinone.

Particular examples of the compounds to be used in the preparation of the polymers I) to VIII) and preferable examples of the anisotropic molten phase-forming polyester to be used in the present invention are described in Japanese Patent Laid-Open No 69866/1986.

Further, the composition of the present invention may contain another thermoplastic resin as an auxiliary component in such an amount as not to hinder the object of the present invention.

The thermoplastic resin to be added as an auxiliary component is not particularly limited, but includes polyolefins such as polyethylene and polypropylene; aromatic polyesters prepared by the polycondensation of an aromatic dicarboxylic acid with a diol, such as polyethylene phthalate and polybutylene terephthalate, or that of a hydroxy carboxylic acid; polyacetal (homo- and copolymers); polystyrene; polyvinyl chloride; polyamide; polycarbonate; ABS; polyphenylene oxide; polyphenylene sulfide and fluororesins. These thermoplastic resins may be also used as a mixture of two or more of them.

Further, the composition of the present invention may contain various fibrous, powdery, granular or flaky inorganic fillers depending upon the required duty.

The fibrous filler includes inorganic fibrous materials, for example, glass fiber, asbestos fiber, silica fiber, silica/alumina fiber, alumina fiber, zirconia fiber, boron nitride fiber, silicon nitride fiber, boron fiber, potassium titanate fiber and fibers of metals such as stainless steel, aluminium, titanium, copper or brass.

The powdery and granular fillers include carbon black, graphite, silica, quartz powder, glass bead, milled glass fiber, glass balloons, glass powder, silicates such as calcium silicate, aluminium silicate, kaolin, talc, clay, diatomaceous earth and wollastonite; metal oxides such as iron oxide, titanium oxide, zinc oxide, antimony trioxide and alumina; metal carbonates such as calcium carbonate and magnesium carbonate; metal sulfates such as calcium sulfate and barium sulfate; ferrite, silicon carbide, silicon nitride, boron nitride and various metal powders.

The flaky filler includes mica, glass flake and various metal foils.

These inorganic fillers may be used alone or as a mixture of two or more of them.

If necessary, these fillers may be each used together with a sizing agent or surface treatment. Examples thereof include functional compounds such as epoxy, isocyanate, silane and titanate compounds. These compounds may be each preliminarily applied to the filler to be added to the resin or may b added in the course of the preparation of the composition.

The amount of the inorganic filler to be added is at most 500 parts by weight, preferably 0.5 to 500 parts by weight, particularly preferably 5 to 250 parts by weight, per 100 parts by weight of the liquid-crystal polyester resin used. If the amount exceeds 500 parts by weight, the resulting composition will be so poor in fluidity that it will be difficult to mold the composition particularly with a mold having a complicated shape. Further, if the amount is too large, the resulting composition will be brittle, thereby harming the mechanical strength of an article molded therefrom.

Further, the composition of the present invention may suitably contain additives which are generally added to a thermoplastic or thermosetting resin depending upon the performance required. Examples of the additives includes stabilizers such as antioxidant and ultraviolet absorber; antistatic agent; flame retardant; coloring agents such as dye and pigment and lubricant.

The liquid-crystal polyester resin composition of the present invention can be prepared according to a conventional process for the preparation of a synthetic resin composition with conventional equipment therefor. Thus the composition can be prepared by mixing necessary components with each other and kneading and pelletizing the obtained mixture with a single- or twin-screw extruder. Further, a part of necessary components may be added as a master batch to the rest thereof. Alternatively, in order to facilitate the dispersion and mixing of the components, a part or the whole of the liquid-crystal polyester resin may be pulverized and mixed with the other components, following by melt-extrusion.

The liquid-crystal polyester resin composition of the present invention has the following advantages:
(1) the mold release resistance of the composition of the present invention is reduced to 1/2 to 1/4 of that of a liquid-crystal polyester not containing the fatty acid ester according to the present invention, so that the composition of the present invention can be stably injection-molded in a continuous manner without causing any deformation or breakage of a molded article due to poor mold release characteristics. Thus, the molding cycle of the composition is shortened, whereby productivity is considerably increased, and
(2) the release agent according to the present invention is more stable thermally and chemically than those according to the prior art in injection molding or kneading, so that the composition of the present invention containing the same is less discolored and does not evolve any gas during its presence in an injection molding machine. Therefore, the mold used is not corroded by the decomposition gas. Further, the composition produces less staining of the contacts of an electrical component and the mechanical properties of the composition are not adversely affected.

### (Example)

The present invention will now be described in more detail by referred to the following Examples, but is not limited to them.

The liquid-crystal polyesters used in the Examples have the following constituent units: 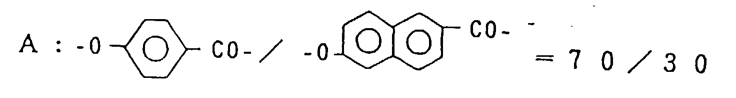 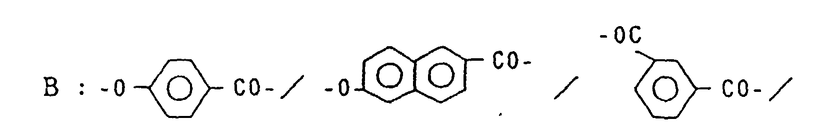 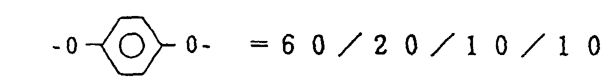 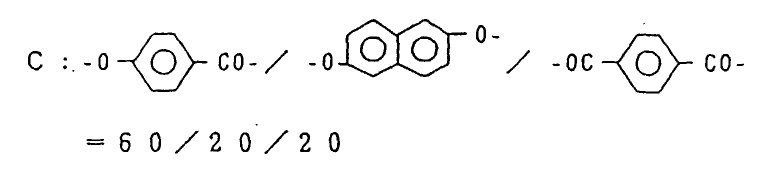 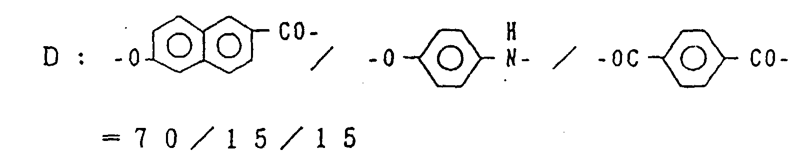 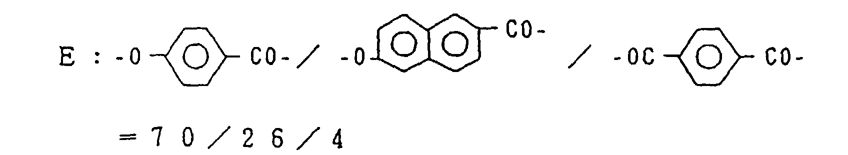 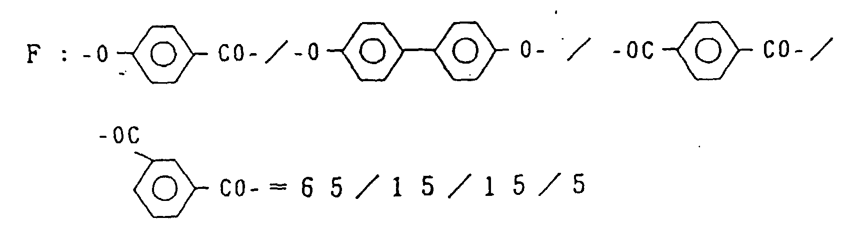 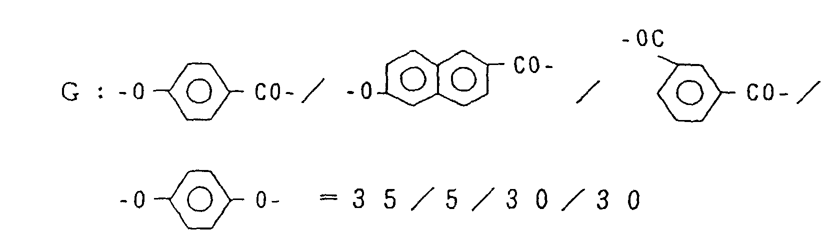 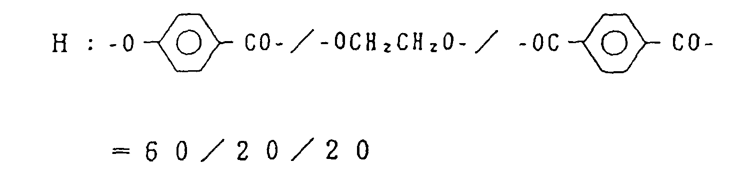 (all figures mean molar ratios)

### Examples 1 to 11

100 parts by weight of each of eight liquid-crystal polyester resins A to H which will be described below was mixed with 60 parts by weight of glass fiber, 40 parts by weight of milled fiber and 0.5 part by weight of a stearate of pentaerythritol listed in Table 1. The resulting mixture was pelletized with a conventional extruder and the obtained pellet was molded with an injection molding machine at a cylinder temperature of 300°C into a test piece according to ASTM. This test piece was examined for various characteristics.

The mold-release resistance was determined by carrying out the injection molding by the use of a boxy mold having an ejector pin fitted with a pressure sensor at a mold temperature of 120°C to measure the pressure applied to the ejector pin for releasing a molded article from the mold. Gas evolution was determined by observing whether fume was evolved from a nozzle in the injection molding or not. The electric resistance was determined by placing 22 g of the above pellet on the bottom of a test tube having an outside diameter of 30 mm and a height of 150 mm, hanging a silver plate (2 mm x 12 mm) with a thread at a height of about 60 mm from the top of the pellet, stoppering the test tube, placing the test tube in a fan dryer to treat it as 260°C for one hour, taking the silver plate out of the test tube and measuring the electric resistance of the surface of the plate with a contact pressure of 10 g by the use of a milliohm meter. A smaller value of the electric resistance suggests a less stain. The results are shown in Table 1.

### Examples 12 to 14

100 parts by weight of liquid-crystal polyester resin A which will be described below was mixed with 45 parts by weight of potassium titanate fiber and pentaerythritol tetrastearate in an amount specified in Table 2. The obtained mixture was pelletized with a conventional extruder. The obtained pellet was similarly treated and examined for mold release and other characteristics. The results are shown in Table 2.

### Examples 15 to 17

100 parts by weight of liquid-crystal polyester resin A which will be described below was mixed with 45 parts by weight of glass fiber and pentaerythritol tristearate in an amount specified in Table 3. The obtained mixture was pelletized with a conventional extruder. The obtained pellet was similarly treated and examined for mold release and other characteristics. The results are shown in Table 3. The flexural strength and flexural modulus results are given in kg/cm² (1 kg/cm² = 0.0981 MPa).

### Comparative Examples 1 to 5.

The same procedure as that described in Example 1 was repeated except that no pentaerythritol tetrastearate was used or that the pentaerythritol tetrastearate was replaced by a release agent listed in Table 4 not according to the present invention. The results are shown in Table 4.

### Comparative Examples 6 and 7

The results are shown in Table 5.

### Comparative Examples 8 to 10

100 parts by weight of a heat-resistant resin listed in Table 6, 45 parts by weight of glass fiber and pentaerythritol tetrastearate in an amount specified in Table 6 were mixed together and pelletized with a conventional extruder. The obtained pellet was similarly treated and examined for mold release and other characteristics. The results are shown in Table 6.

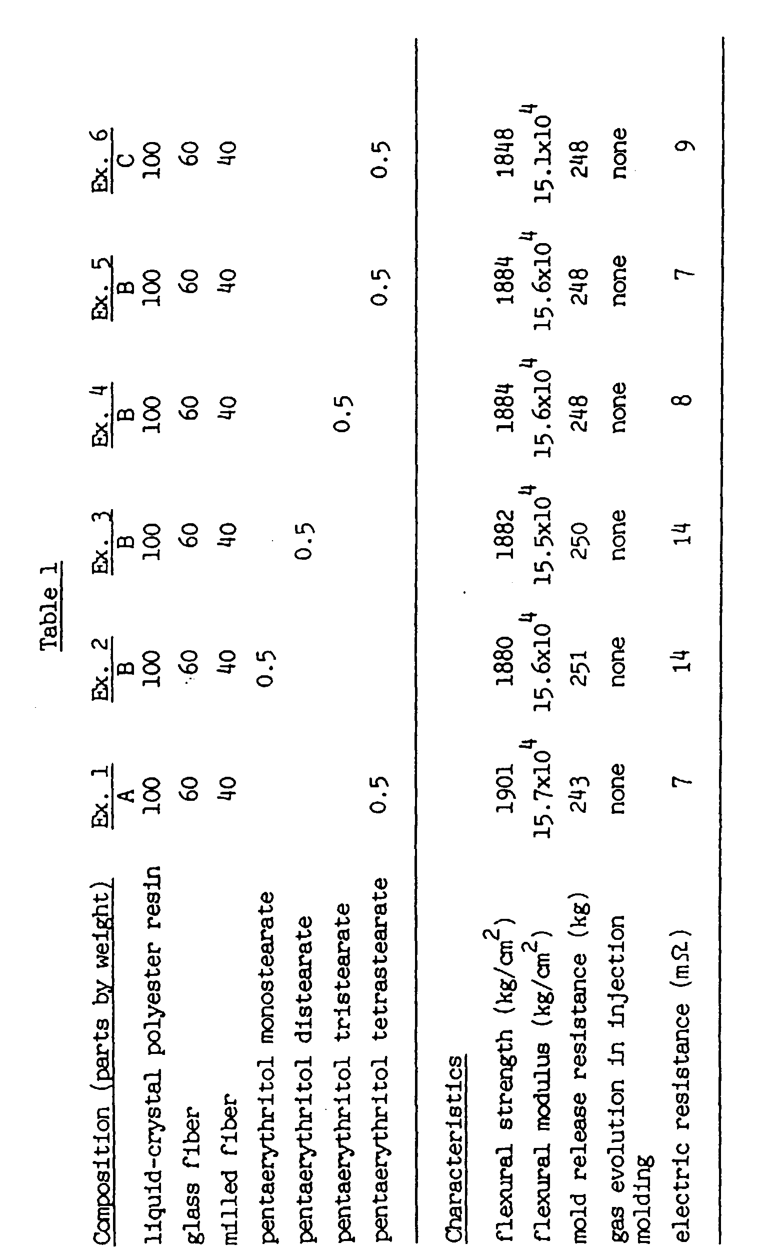

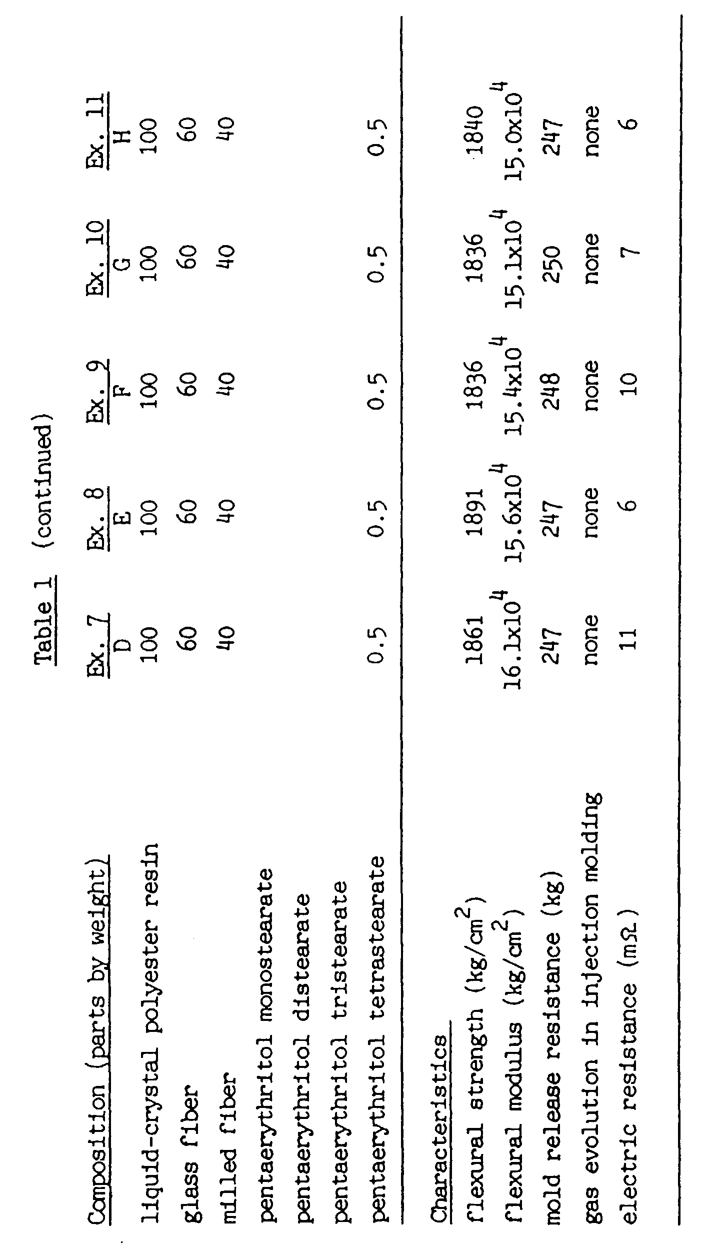

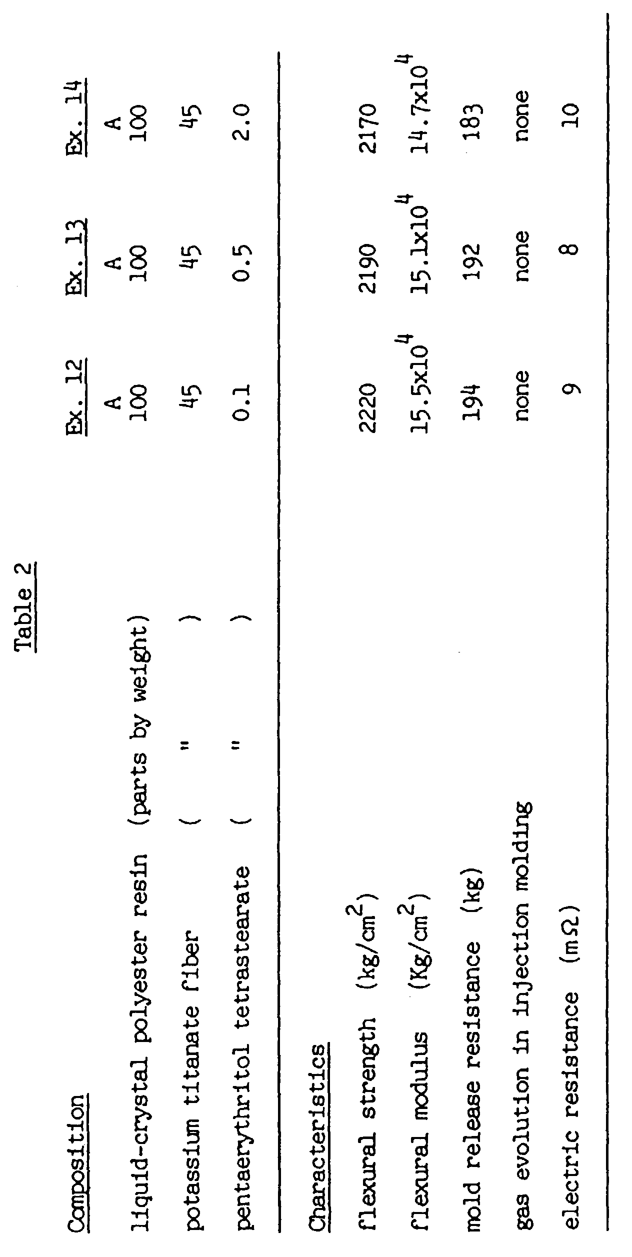

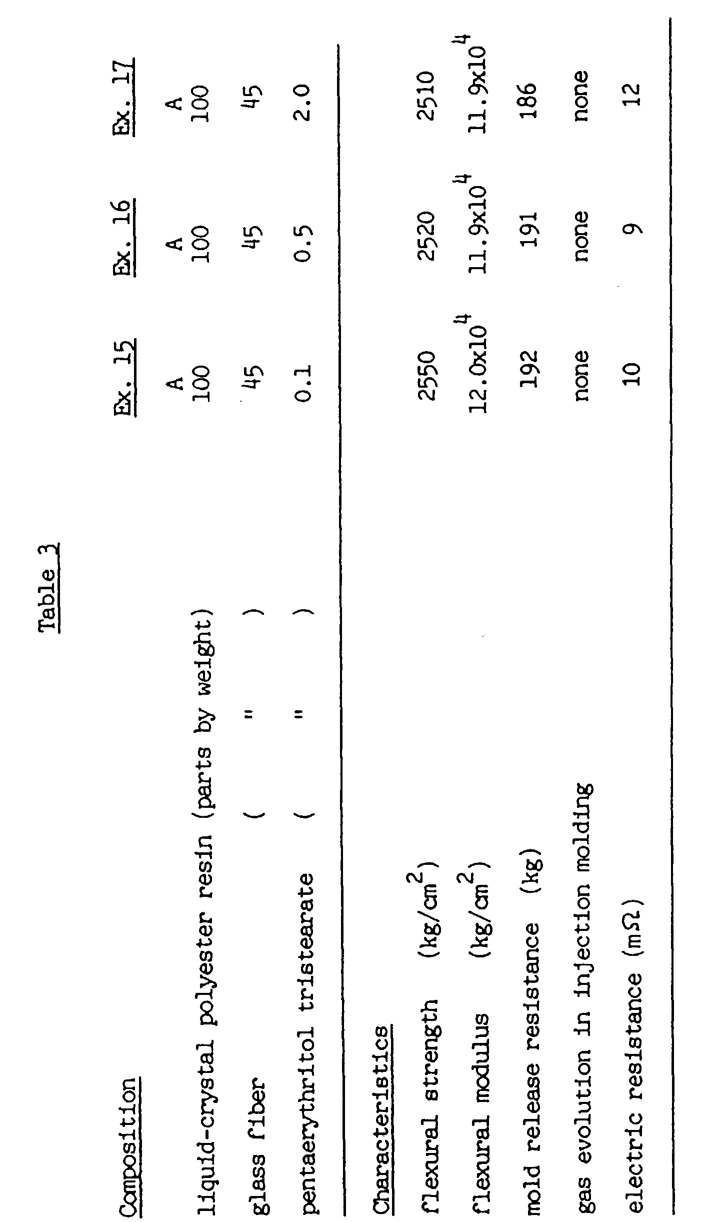

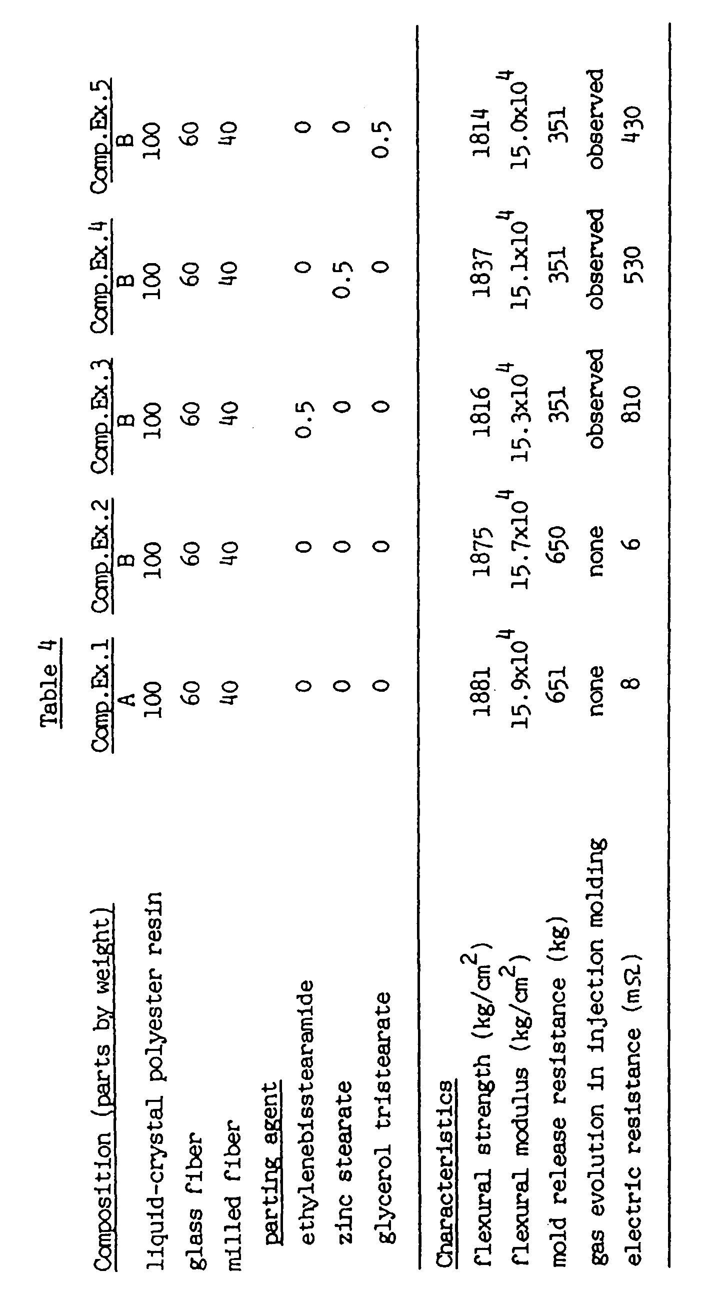

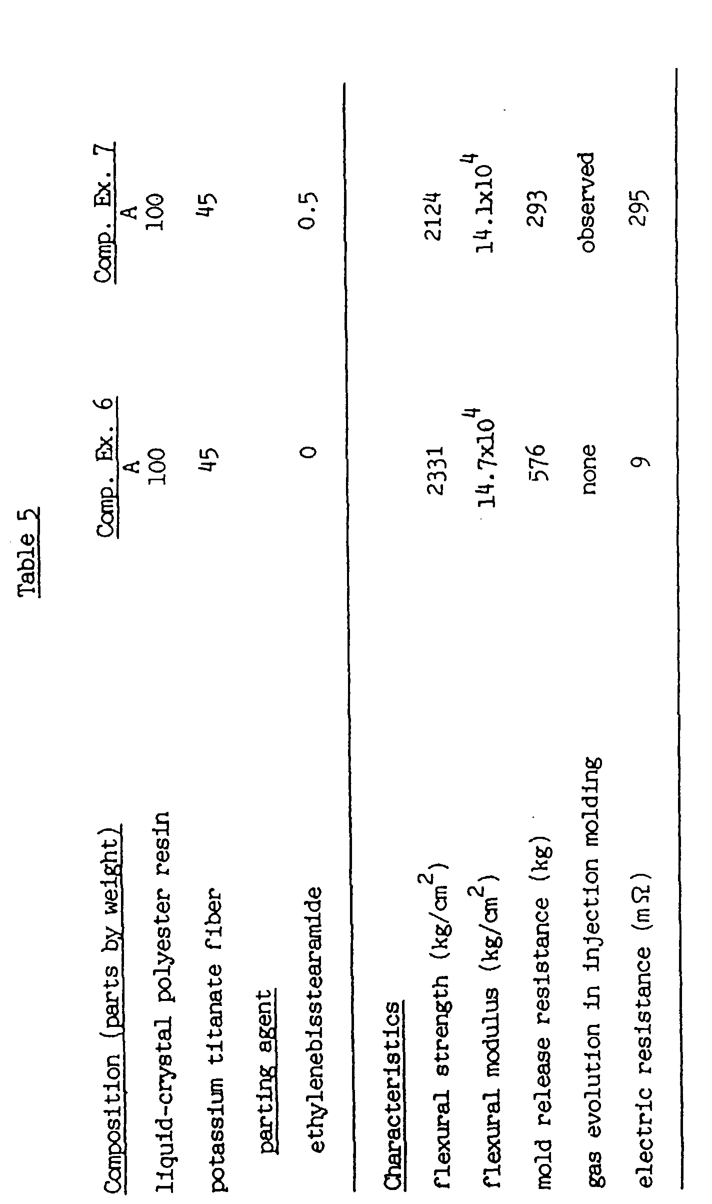

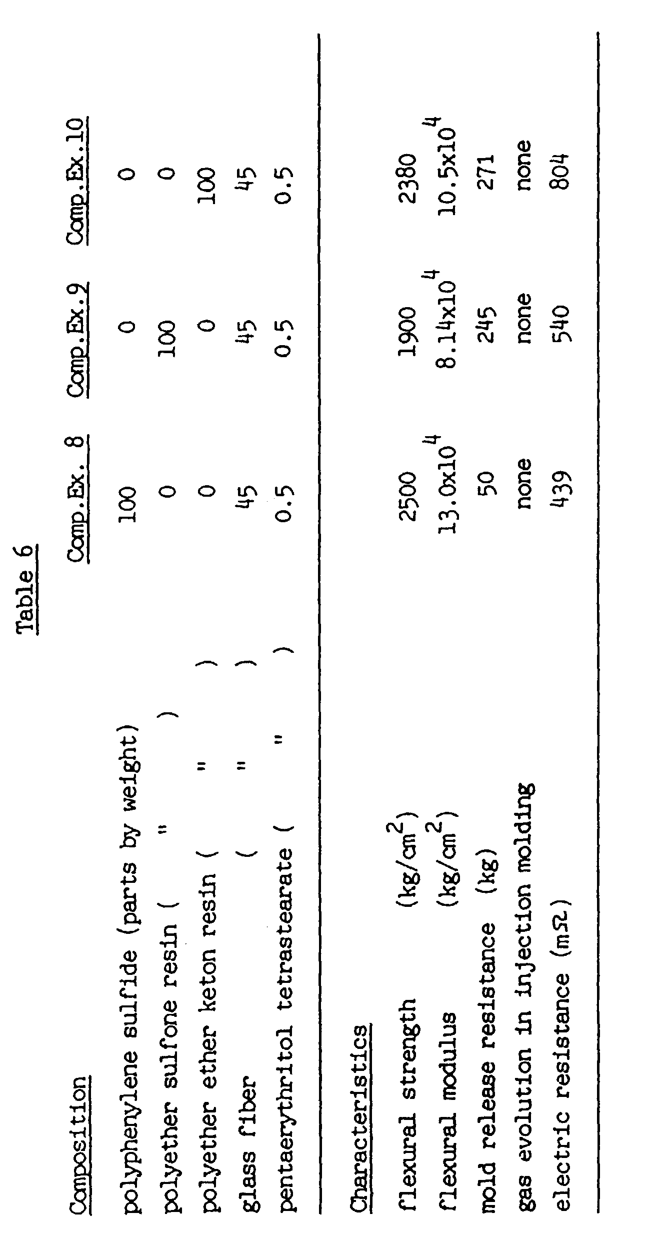

## Claims

1. A liquid-crystal polyester resin composition comprising:
(A) 100 parts by weight of a liquid-crystal polyester resin consisting of aromatic segments and, optionally, up to 20 mol% segments of poly (C₂₋₄alkylene)terephthalate and
(B) 0.01 to 5 parts by weight of a fatty acid ester represented by the general formula: 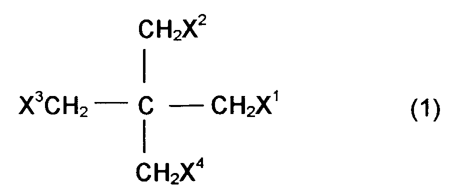 wherein at least one of X¹, X², X³, and X⁴ is a group represented by the general formula: 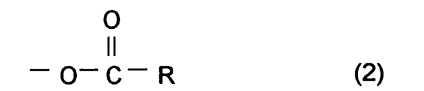 wherein R is an alkyl or alkenyl group having 2 to 30 carbon atoms,
and the others thereof are each -H, -OH or an alkyl or aryl group.

2. A liquid-crystal polyester resin composition as set forth in claim 1, characterized in that the liquid-crystal polyester resin is constituted from monomers selected from naphthalene compounds, biphenyl compounds and p-substituted benzene compounds.

3. A liquid-crystal polyester resin composition as set forth in claim 1 or claim 2, characterized in that the fatty acid ester (B) is one represented by the general formula (1), wherein all of X¹, X², X³, and X⁴ are groups represented by the general formula (2).

4. A liquid-crystal polyester resin composition as set forth in claim 1 or claim 2, characterized in that the fatty acid ester is one represented by the general formula (1), wherein all of X¹, X², and X³, are groups represented by the general formula (2) and X⁴ is -H, -OH, or an alkyl or aryl group.

5. A liquid-crystal polyester resin composition as set forth in any preceding claim, characterized in that R is an alkyl group having 8 to 24 carbon atoms.

6. A liquid-crystal polyester resin composition as set forth in any preceding claim, characterized in that when any of X¹, X², X³, and X⁴ is an alkyl group, each such alkyl group has 1 to 6 carbon atoms.

7. A liquid-crystal polyester resin composition as set forth in any preceding claim, characterized in that when any of X¹, X², X³, and X⁴ is an aryl group, each such aryl group is phenyl.

8. A liquid-crystal polyester resin composition as set forth in any preceding claim, characterized in that the amount of the fatty acid ester is 0.1 to 2 parts by weight, per 100 parts of the polyester resin.

9. A liquid-crystal polyester resin composition as set forth in any preceding claim, which further contains one or more inorganic fillers in an amount not exceeding 500 parts by weight, per 100 parts of the polyester resin.

10. A liquid-crystal polyester resin composition as set forth in claim 9, characterized in that the amount of the inorganic filler(s) is 5 to 250 parts by weight, per 100 parts of the polyester resin.

## Patentansprüche

1. Flüssig-kristalline Polyesterharz-Zusammensetzung, umfassend:
(A) 100 Gewichtsteile eines flüssig-kristallinen Polyesterharzes, das aus aromatischen Segmenten und gegebenenfalls bis zu 20 Mol-% Poly(C₂₋₄-alkylen)terephthalat-Segmenten besteht, und
(B) 0,01 bis 5 Gewichtsteile eines Fettsäureesters, dargestellt durch die allgemeine Formel: 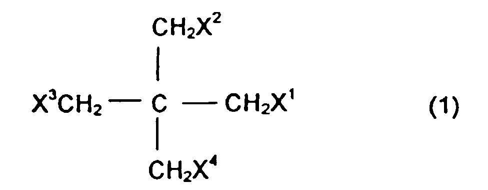 worin wenigstens eines von X¹, X², X³ und X⁴ eine Gruppe ist, die durch die allgemeine Formel: 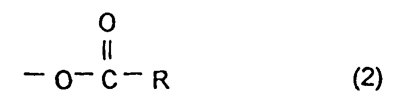 dargestellt wird, worin R eine Alkyl- oder Alkenylgruppe mit 2 bis 30 Kohlenstoffatomen ist,
und die anderen derselben jeweils -H, -OH oder eine Alkyl- oder Arylgruppe sind.

2. Flüssig-kristalline Polyesterharz-Zusammensetzung gemäß Anspruch 1, dadurch gekennzeichnet, daß das flüssig-kristalline Polyesterharz aus Monomeren besteht, die aus Naphthalin-Verbindungen, Biphenyl-Verbindungen und para-substituierten Benzol-Verbindungen ausgewählt werden.

3. Flüssig-kristalline Polyesterharz-Zusammensetzung gemäß Anspruch 1 oder Anspruch 2, dadurch gekennzeichnet, daß der Fettsäureester (B) durch die allgemeine Formel (1) dargestellt wird, worin alle X¹, X², X³ und X⁴ Gruppen sind, die durch die allgemeine Formel (2) dargestellt werden.

4. Flüssig-kristalline Polyesterharz-Zusammensetzung gemäß Anspruch 1 oder Anspruch 2, dadurch gekennzeichnet, daß der Fettsäureester durch die allgemeine Formel (1) dargestellt wird, worin alle X¹, X², X³ Gruppen sind, die durch die allgemeine Formel (2) dargestellt werden und X⁴ -H, -OH oder eine Alkyl- oder Arylgruppe ist.

5. Flüssig-kristalline Polyesterharz-Zusammensetzung gemäß irgendeinem der vorhergehenden Ansprüche, dadurch gekennzeichnet, daß R eine Alkylgruppe mit 8 bis 24 Kohlenstoffatomen ist.

6. Flüssig-kristalline Polyesterharz-Zusammensetzung gemäß irgendeinem der vorhergehenden Ansprüche, dadurch gekennzeichnet, daß wenn irgendeines von X¹, X², X³ und X⁴ eine Alkylgruppe ist, jede derartige Alkylgruppe 1 bis 6 Kohlenstoffatome aufweist.

7. Flüssig-kristalline Polyesterharz-Zusammensetzung gemäß irgendeinem der vorhergehenden Ansprüche, dadurch gekennzeichnet, daß wenn irgendeines von X¹, X², X³ und X⁴ eine Arylgruppe ist, jede derartige Arylgruppe Phenyl ist.

8. Flüssig-kristalline Polyesterharz-Zusammensetzung gemäß irgendeinem der vorhergehenden Ansprüche, dadurch gekennzeichnet, daß die Menge des Fettsäureesters 0,1 bis 2 Gewichtsteile pro 100 Gewichtsteile des Polyesterharzes beträgt.

9. Flüssig-kristalline Polyesterharz-Zusammensetzung gemäß irgendeinem der vorhergehenden Ansprüche, die weiterhin einen anorganischen Füllstoff oder mehrere anorganische Füllstoffe in einer Menge enthält, die 500 Gewichtsteile pro 100 Gewichtsteile des Polyesterharzes nicht übersteigt.

10. Flüssig-kristalline Polyesterharz-Zusammensetzung gemäß Anspruch 9, dadurch gekennzeichnet, daß die Menge des anorganischen Füllstoffs (der anorganischen Füllstoffe) 5 bis 250 Gewichtsteile pro 100 Gewichtsteile des Polyesterharzes beträgt.

## Revendications

1. Composition de résine polyester à cristaux liquides, comprenant :
(A) 100 parties en poids d'une résine polyester à cristaux liquides constituée par des segments aromatiques et, facultativement, jusqu'à 20 % en moles de segments de poly téréphtalate d'alkylène en C₂ à C₄ et
(B) 0,01 à 5 parties en poids d'un ester d'acide gras représenté par la formule générale : 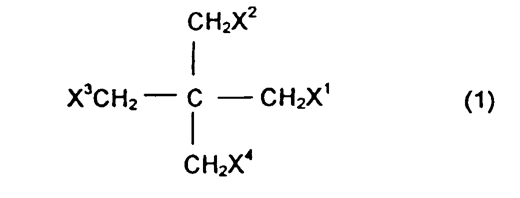 dans laquelle au moins l'un de X¹, X², X³ et X⁴ est un groupe représenté par la formule générale : 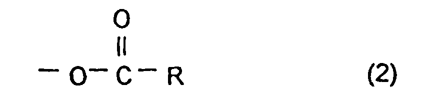 dans laquelle R est un groupe alkyle ou alcényle ayant 2 à 30 atomes de carbone,
et les autres sont chacun -H, -OH ou un groupe alkyle ou aryle.

2. Composition de résine polyester à cristaux liquides selon la revendication 1, caractérisée en ce que la résine polyester à cristaux liquides est constituée par des monomères choisis parmi les composés naphtaléniques, les composés biphényliques et les composés benzéniques p-substitués.

3. Composition de résine polyester à cristaux liquides selon la revendication 1 ou la revendication 2, caractérisée en ce que l'ester d'acide gras (B) est représenté par la formule générale (1), où X¹, X², X³ et X⁴ sont tous des groupes représentés par la formule générale (2).

4. Composition de résine polyester à cristaux liquides selon la revendication 1 ou la revendication 2, caractérisée en ce que l'ester d'acide gras est représenté par la formule générale (1), où X¹, X² et X³ sont tous des groupes représentés par la formule générale (2) et X⁴ est -H, -OH ou un groupe alkyle ou aryle.

5. Composition de résine polyester à cristaux liquides selon l'une quelconque des revendications précédentes, caractérisée en ce que R est un groupe alkyle ayant 8 à 24 atomes de carbone.

6. Composition de résine polyester à cristaux liquides selon l'une quelconque des revendications précédentes, caractérisée en ce que lorsque l'un quelconque de X¹, X², X³ et X⁴ est un groupe alkyle, chaque tel groupe alkyle a 1 à 6 atomes de carbone.

7. Composition de résine polyester à cristaux liquides selon l'une quelconque des revendications précédentes, caractérisée en ce que lorsque l'un quelconque de X¹, X², X³ et X⁴ est un groupe aryle, chaque tel groupe aryle est un groupe phényle.

8. Composition de résine polyester à cristaux liquides selon l'une quelconque des revendications précédentes, caractérisée en ce que la proportion de l'ester d'acide gras est de 0,1 à 2 parties en poids, pour 100 parties de la résine polyester.

9. Composition de résine polyester à cristaux liquides selon l'une quelconque des revendications précédentes, qui contient en outre une ou plusieurs charges inorganiques en une proportion ne dépassant pas 500 parties en poids pour 100 parties de la résine polyester.

10. Composition de résine polyester à cristaux liquides selon la revendication 9, caractérisée en ce que la proportion de la (des) charge(s) inorganique(s) est de 5 à 250 parties en poids pour 100 parties de la résine polyester.
